(19) Europäisches Patentamt
European Patent Office
Office européen des brevets

(11) EP 1 130 861 A1

(12) DEMANDE DE BREVET EUROPEEN

(43) Date de publication:
**05.09.2001 Bulletin 2001/36**

(51) Int Cl.[7]: **H04L 25/02**

(21) Numéro de dépôt: **00403583.8**

(22) Date de dépôt: **18.12.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **30.12.1999 FR 9916851**

(71) Demandeur: **Mitsubishi Electric Information Technology Centre Europe B.V.**
**1101 AG Amsterdam Zuidoost (NL)**

(72) Inventeurs:
- **Rudolf, Marian**
  **37500 Rennes (FR)**
- **Jechoux, Bruno**
  **37500 Rennes (FR)**

(74) Mandataire: **Maillet, Alain**
**Cabinet le Guen & Maillet,**
**5, Place Newquay,**
**B.P. 70250**
**35802 Dinard Cedex (FR)**

# (54) Méthode d'estimation d'un canal de transmission ou de télécommunications

(57) La présente invention concerne une méthode d'estimation d'un canal de transmission ou de télécommunications consistant à utiliser une paire de séquences complémentaires, c'est-à-dire $s(n)$ et $g(n)$ , avec $n = 0,1,...,N-1$, qui ont la propriété que la somme de leurs auto-corrélations est une fonction de Dirac parfaite, c'est-à-dire que :

$$\varphi_{s,s}(n)+ \varphi_{g,g}(n) = k\cdot\delta(n) \qquad (1)$$

On utilise un signal composite constitué de deux séquences complémentaires $s(n)$ et $g(n)$, après avoir multiplexé dans le temps ces deux séquences de manière à exploiter la propriété de la relation (1) ci-dessus.

Le signal composite est constitué des deux séquences qui sont concaténées avec, entre elles, un intervalle de garde d'une durée supérieure ou égale à la longueur de la réponse impulsionnelle du canal à estimer.

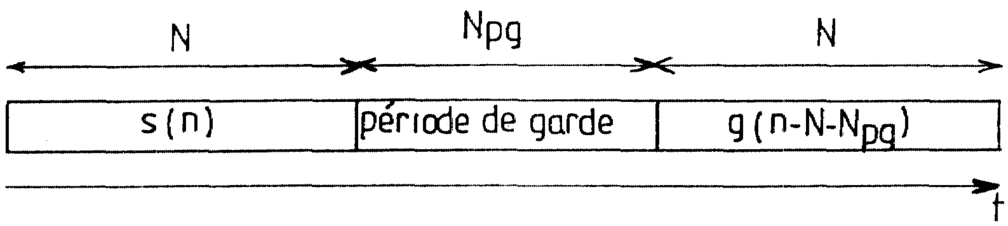


FIG.3

EP 1 130 861 A1

## Description

La présente invention concerne une méthode d'estimation d'un canal de transmission ou de télécommunications qui utilise des séquences complémentaires. La méthode a pour résultat une estimation optimale des retards, des phases et des atténuations des différents trajets dans le cas d'un canal à un seul trajet ou à trajets multiples.

Dans un système de télécommunications, les informations circulent entre des émetteurs et des récepteurs par l'intermédiaire de canaux. A ce sujet, la Fig. 1 illustre un modèle discret dans le temps de la chaîne de transmission entre un émetteur 1 et un récepteur 2 par l'intermédiaire d'un canal de transmission 3. D'une manière générale, les canaux de transmissions peuvent correspondre à différents supports physiques, radioélectriques, filaires, optiques, etc., et à différents environnements, communications fixes ou mobiles, satellites, câbles sous-marins, etc.

Du fait des réflexions multiples dont peuvent être l'objet les ondes émises par l'émetteur 1, le canal 3 est un canal multi-trajet qui est généralement modélisé comme l'indique la Fig. 1. Il est alors considéré être un registre à décalage 30 comportant $L$ cases en série (référencées par un indice k pouvant prendre les valeurs comprises entre 1 et $L$) et dont les contenus glissent vers la droite sur la Fig. 1 à chaque arrivée d'un symbole sur son entrée. La sortie de chaque case d'indice $k$ est l'objet d'un filtre 32 représentatif de la perturbation subie qui agit sur l'amplitude $\alpha_k$, apporte un déphasage $\alpha_k$ et un retard $r_k$.. La sortie de chaque filtre 32 est sommée dans un sommateur 33. La réponse impulsionnelle globale ainsi obtenue est notée *h(n)*.

La sortie du sommateur 32 est fournie à l'entrée d'un additionneur 33 pour l'addition d'un signal aléatoire, modélisé par un bruit blanc gaussien, $w(n)$ qui correspond au bruit thermique présent dans le système de télécommunications.

A la Fig. 1, on a utilisé, dans le canal 3, la mention *h(n)* pour le registre 30, les flitres 32 et le sommateur 32 suivi d'un additionneur 33 qui ajoute le bruit *w(n)*.

On comprendra que si l'émetteur 1 émet le signal *e(n)*, le signal reçu $r(n)$, dans le récepteur 2, est donc :

$$
\begin{aligned}
r(n) &= e(n) * h(n) + w(n) \\
&= e(n) * \sum_{k=1}^{L} a_k \delta(n - r_k) e^{j\alpha_k} + w(n) \\
&= \sum_{k=1}^{L} a_k e(n - r_k) e^{j\alpha_k} + w(n)
\end{aligned}
$$

Dans ces expressions,

$$h(n) = \sum_{k=1}^{L} a_k \delta(n - r_k) e^{j\alpha_k}$$

dénote la réponse impulsionnelle du canal, $\delta(n)$ étant l'impulsion de Dirac et $\delta(n\text{-}r_k)$ dénotant une fonction retard de la valeur $r_k$.. L'opérateur * désigne le produit de convolution, défini de manière générale par la relation suivante :

$$c(n) = a(n) * b(n) = \sum_{m=-\infty}^{+\infty} a(m) \cdot b(n - m)$$

Il est donc en général nécessaire de déterminer les caractéristiques du canal 3, à un instant donné, afin de contrecarrer le distorsion induite du signal émis *e(n)*. Pour obtenir une estimation de $h(n)$, c'est-à-dire des coefficients $\alpha_k$, $r_k$ et $\alpha_k$ du modèle du canal 3, il faut répéter cette opération à une fréquence plus ou moins grande en fonction de la rapidité avec laquelle les caractéristiques du canal évoluent.

Une méthode répandue d'estimation du canal consiste à faire émettre, par l'émetteur 1, des signaux $e(n)$ prédéterminés et connus du récepteur 2 et à comparer les signaux reçus *r(n)* dans le récepteur 2, au moyen d'une corrélation périodique ou apériodique, avec ceux qui y sont attendus pour en déduire les caractéristiques du canal. La corrélation apériodique de deux signaux de longueur N a une longueur totale 2N-1 et s'exprime, à partir du produit de convolution, par la relation :

$$\varphi_{a,b}(n) = a^*(-n) * b(n) = \sum_{m=0}^{N-1} a(m) \cdot b(m+n)^{(1)} \quad , [m] = 0, 1, \ldots, N\text{-}1$$

pour deux signaux $a(n)$ et $b(n)$ de longueur finie N, où l'opérateur * dénote l'opération conjuguée complexe.

La corrélation du signal reçu $r(n)$ avec le signal émis $e(n)$ connu se traduit par :

$$\begin{aligned} r(n) * e^*(-n) &= [e(n) * h(n) + w(n)] * e^*(-n) \\ \varphi_{e,r}(n) &= \varphi_{e,e*h}(n) + \varphi_{e,w}(n) \\ &= \varphi_{e,e}(n) * h(n) + \varphi_{e,w}(n) \end{aligned}$$

Le résultat de l'opération de corrélation constitue l'estimé de la réponse impulsionnelle du canal ; la qualité ou la précision de l'estimé est d'autant meilleure que $\varphi_{e,r}(n)$ tend vers $h(n)$. Celle-ci est donc directement dépendante du choix de la séquence émise $e(n)$: pour optimiser la procédure d'estimation, le signal $e(n)$ doit être choisi de manière que l'auto-corrélation $\varphi_{e,e}(n)$ tende vers $k \cdot \delta(n)$, $k$ étant un nombre réel, et que $\varphi_{e,w}(n)/\varphi_{e,e}(n)$ tende vers 0. En effet, dans ce cas, l'estimé du canal devient :

$$\begin{aligned} \varphi_{e,r}(n) &= k \cdot \delta(n) * h(n) + \varphi_{e,w}(n) \\ &= k \cdot h(n) + \varphi_{e,w}(n) \end{aligned}$$

$$\varphi_{e,r}(n) \approx k \cdot h(n)$$

Il a été démontré qu'il n'existe pas de séquence unique pour laquelle la fonction d'auto-corrélation apériodique $\varphi_{e,e}(n) = k.\ \delta(n)$.

Un objet de la présente invention consiste à utiliser des paires de séquences complémentaires qui ont la propriété que la somme de leurs auto-corrélations est une fonction de Dirac parfaite. Soit $s(n)$ et $g(n)$, $n = 0,1,...,N - 1$ une paire de séquences complémentaires:

$$\varphi_{s,s}(n) + \varphi_{g,g}(n) = k \cdot \delta(n) \qquad (1)$$

Plusieurs procédés sont connus dans la littérature pour construire de telles séquences complémentaires: séquences complémentaires de Golay, séquences complémentaires polyphases, séquences de Welti, etc. A titre d'information, on pourra se reporter, à ce sujet, aux documents techniques suivants, qui traitent de l'introduction aux séquences complémentaires et, en particulier, aux séquences complémentaires de Golay ainsi qu'à un corrélateur de Golay :

1) « On aperiodic and periodic complementary sequences » par Feng K., Shiue P. J.-S., et Xiang Q., publié dans la revue technique IEEE Transactions on Information Theory, Vol. 45, n° 1, Janvier 1999,
2) « Korrelationssignale » par Lüke H.-D., publié dans la revue technique ISBN 3-540-54579-4, Springer-Verlag Heidelberg New York, 1992,
3) « Polyphase Complementary Codes » par R. L. Frank, publié dans la revue technique IEEE Transactions on Information Theory, Novembre 1980, Vol. IT26, n° 6,
4) « Multiphase Complementary Codes » par R. Sivaswamy, publié dans la revue technique IEEE Transactions on Information Theory, septembre 1978, Vol. IT-24, n° 5,
5) « Efficient pulse compressor for Golay complementary sequences » par S.Z. Budisin, publié dans la revue technique Electronics Letters, Vol. 27, n° 3, janvuer 1991,

6) « Complementary Series » par M.J. Golay, publé dans la revue technqieu IRE Trans ; on Information Theory » Vol. IT-7, avril 1961,

7) « Efficient Golay Correlator » par B.M. Popovic, publié dans la revue technique IEEE Electronics Letters, Vol. 35, n° 17, août 1999.

On pourra aussi se reporter aux descriptions des documents US-A-3 800 248, US-A-4 743 753, US-A-4 968 880, US-A-7 729 612, US-A-5 841 813, US-A-5 862 182 et US-A-5 961 463.

La propriété de séquences complémentaires d'avoir une somme d'auto-corrélation parfaite est illustrée à la Fig. 2, en prenant, à titre d'exemple, une paire de séquences *s(n)* et *g(n)* complémentaires de Golay de longueur N = 16 bits.

A la Fig. 2, sont portés en abscisses les décalages temporels par rapport à la synchronisation parfaite. Les décalages possibles sont numérotés de 1 à 31 pour la paire de séquences *s(n)* et *g(n),* et en ordonnées les corrélations de -5 à +35. La courbe en traits tirets correspond à l'auto-corrélation $\varphi_{s,s}(n)$de la séquence *s(n)*; la courbe en traits mixtes à l'auto-corrélation $\varphi_{g,g}$ $(n)$ de la séquence *g(n)*; et la courbe en trait plein à la somme des auto-corrélations $\varphi_{s,s}$ $(n)$ et $\varphi_{g,g}$ $(n)$. On peut voir que la courbe en trait plein se confond avec l'axe des abscisses entre les points 0 et 15 et les points 17 et 31, mais qu'elle correspond pratiquement à une fonction de Dirac entre les points 15 à 17.

On peut montrer que les propriétés d'auto-corrélation théoriquement parfaites de ces séquences complémentaires ne sont néanmoins exploitables que, si leur transmission peut être assurée d'une manière telle que l'occurrence d'inter-corrélations $\varphi_{s,g}(n)$ et/ou $\varphi_{g,s}(n)$ est évitée.

Suivant une caractéristique de l'invention, il est prévu une méthode d'estimation d'un canal de transmission ou de télécommunications, dans laquelle on utilise un signal composite de séquences complémentaires et dans laquelle on transmet une paire complémentaire de séquences $s(n)$ et $g(n)$ après les avoir multiplexées en temps .

Suivant une autre caractéristique de l'invention, il est prévu une méthode de construction du signal composite à partir d'une paire de séquences complémentaires $s(n)$ et $g(n)$ multiplexées en temps, cette méthode permettant d'exploiter la propriété $\varphi_{s,s}(n)$ + $\varphi_{g,g}$ $(n)$.

La méthode permet donc d'obtenir une estimation optimale du canal.

Suivant une autre caractéristique, le signal composite est constitué de deux séquences complémentaires $s(n)$ et $g(n)$ concaténées, avec entre elles, un intervalle de garde d'une durée $N_{pg}$ supérieure ou égale à la longueur $L$ de la réponse impulsionnelle du canal à estimer.

De cette manière, on est assuré que la réplique de $s(n)$ qui a suivi le trajet le plus long arrive avant la réplique de $g(n)$ qui a suivi le trajet le plus court. Le signal émis est alors de la forme :

$$E(n) = s(n)+ g(n - N - N_{pg}) \qquad (2)$$

avec $N_{pg}$ choisi de telle manière que $N_{pg} > L - 1$ , et $L$ étant la longueur de la réponse impulsionnelle du canal à estimer.

Suivant une autre caractéristique, il est prévu un dispostif destiné à la génération du signal composite qui comprend, montés en parallèle, un premier circuit générateur de la séquence *s(n)*, avec n = 0, ..., N-1, un deuxième circuit générateur de l'intervalle de garde, $N_{pg}$ = 0, et un troisième circuit générateur de la séquence *g(n)*, avec n= 0, ..., N-1, les sorties des générateurs étant sélectivement reliées à la sortie du dispositif par un circuit de multiplexage dans le temps.

Les caractéristiques de la présente invention mentionnées ci-dessus, ainsi que d'autres, apparaîtront plus clairement à la lecture de la description d'exemples de réalisation, ladite description étant faite en relation avec les dessins joints, parmi lesquels:

la Fig. 1 est un schéma connu d'un modèle discret d'un canal de transmission,
la Fig. 2 est une courbe connue illustrant l'auto-corrélation de deux séquences complémentaires de Golay et la somme de leurs auto-corrélations,
la Fig. 3 illustre la méthode de multiplexage en temps de deux séquences complémentaires, suivant l'invention,
la Fig. 4 est le schéma d'un exemple de réalisation de dispositif prévu pour engendrer la séquence composite de l'invention,
la Fig. 5 est un schéma illustrant une méthode d'estimation de canal par corrélation complète,
la Fig. 6 est un bloc-diagramme illustrant une deuxième méthode d'estimation de canal par corrélation alternée, et
la Fig. 7 est un bloc-diagramme illustrant une troisième méthode d'estimation de canal en utilisant un corrélateur de Golay.

Un dispositif destiné à la génération de la séquence composite $e(n)$ est présenté à la Fig. 3. Il met en oeuvre le principe du multiplexage dans le temps de deux séquences complémentaires $s(n)$ et $g(n)$. Comme on le comprendra par la suite, il correspond à la relation (2) mentionnée ci-dessus.

Le dispositif de la Fig. 3 comprend, montés en parallèle, un premier circuit générateur 4 de la séquence $s(n)$, avec n = 0, ..., N-1, un deuxième circuit générateur 5 de la séquence $N_{pg} = 0$ et un troisième circuit générateur 6 de la séquence $g(n)$, avec n= 0, ..., N-1, les sorties des générateurs étant sélectivement reliées à la sortie 7 du dispositif par un circuit 8 de multiplexage dans le temps.

La fonction d'auto-corrélation de la séquence composite obtenue par ce dispositif peut s'écrire de la manière suivante :

$$\varphi_{e,e}(n) = \varphi_{s,s}(n) + \varphi_{g,g}(n) + \varphi_{s,g}(n - N - N_{pg}) + \varphi_{g,s}(n + N + N_{pg}) \qquad (3)$$

On peut constater que l'on pourra obtenir l'estimé du canal dans une fenêtre de taille $2 \cdot N_{pg} + 1$ pour laquelle cette fonction d'auto-corrélation est égale $\varphi_{s,s}(n) + \varphi_{g,g}(n)$.

On va décrire, dans la suite, comment on peut utiliser le signal composite pour obtenir une estimation du canal et on va, à ce sujet, décrire plusieurs procédés A, B et C.

Le procédé d'estimation A est basé sur un principe de corrélation complète du signal reçu avec la séquence composite $e(n)$, comme le montre la Fig. 5, en appliquant l'équation (3) ci-dessus. A la Fig. 5, le signal r(n) reçu dans le récepteur 2 est appliqué à l'entrée d'un circuit corrélateur 9 établissant une corrélation entre le signal r(n) et le signal e(n) de la relation (2), le corrélateur 9 délivrant à sa sortie l'estimé h(n) du canal. L'instant de réception de la séquence composite est supposé connu grossièrement, ce qui est nécessaire pour synchroniser la fenêtre d'estimation parfaite de ce dispositif d'estimation. D'autre part la réponse impulsionnelle est considérée constante durant toute la séquence composite.

Le procédé d'estimation B est basé sur un principe de corrélation partielle et alternée du signal reçu avec les séquences $s(n)$ et $g(n)$, comme le montre la Fig. 6.

A la Fig. 6, le signal reçu r(n) dans le récepteur 2 est appliqué, d'une part, à un premier corrélateur 10 et, d'autre part, à un second corrélateur 11. Le corrélateur 10 établit la corrélation du signal r(n) avec la séquence s(n) de la relation (2) tandis que le second corrélateur 11 établit la corrélation du signal r(n) avec la séquence g(n) de la relation (2). Les sorties respectives des corrélateurs 10 et 11 sont reliées aux contacts mobiles 12 et 13 d'un dispositif multiplexeur. Le contact 12 est fermé, pendant l'intervalle de temps $N+N_{pg}$, le contact 13 étant ouvert, le contact 12 est ouvert, pendant la durée $N+N_{pg}$, le contact 13 étant fermé. Le contact fixe 12 est relié à un circuit 14 à retard $d_1$ et le contact fixe 13 est relié à un circuit 15 de retard $d_2$. Les sorties des circuits 14 et 15 sont reliées aux deux entrées d'un additionneur 16 qui délivre l'estimé h(n). La différence des retards $d_1$ et $d_2$ est égale à $N+N_{pg}$.

Ce procédé permet de supprimer facilement les composantes d' inter-correlation $\varphi_{s,g}(n)$ et $\varphi_{g,s}(n)$. En effet, les signaux à la sortie des corrélateurs 11 et 12 sont respectivement :

$$\varphi_{s,s}(n) * h(n) + \varphi_{g,s}(n - N - N_{pg}) * h(n)$$

et

$$\varphi_{s,g}(n)^{*} h(n) + \varphi_{g,g}(n - N - N_{pg})^{*} h(n)$$

En prenant en compte pendant une durée $N + N_{pg}$, seulement la sortie du corrélateur par $s(n)$ et ensuite pendant la durée $N + N_{pg}$ seulement la sortie du corrélateur par $g(n)$ on ne conserve donc que les signaux $\varphi_{s,s}(n)^{*}h(n)$et $\varphi_{g,g}(n - N - N_{pg})^{*} h(n)$. Ces signaux sont ensuite retardés respectivement de $d_1$ et de $d_2$ bits et additionnés, ce qui donne finalement en sortie de l'additionneur :

$$\begin{aligned} h(n)_{estimé} &= [\varphi_{ss}(n-d_1) + \varphi_{gg}(n-N-N_{pg}-d_2)] * h(n) \\ &= [\varphi_{ss}(n-d_1) + \varphi_{gg}(n-d_1)] * h(n) \\ &= \delta(n-d_1) * h(n) \\ &= h(n-d_1) \end{aligned}$$

Ce qui est l'estimation optimale du canal, à un décalage décalé de $d_1$ bits près, $d_1$ étant connu.

Le procédé C consiste à optimiser le procédé d'estimation B du point de vue du nombre d'opérations mathématiques à effectuer, si les séquences complémentaires sont construites à partir de séquences complémentaires polyphases dont les séquences complémentaires de Golay constituent le cas spécial d'une réalisation binaire. Les corrélations par rapport à $s(n)$ et par rapport $g(n)$ peuvent être réalisées en une seule étape en utilisant un corrélateur optimisé pour les séquences complémentaires polyphases connu sous le nom de corrélateur de Golay (Extended Golay Correlator) qui a été proposé dans la littérature. Pour ce procédé C, la structure de l'estimateur du canal devient alors celle représentée à la Fig. 7.

L'estimateur de canal de la Fig. 7 comporte une entrée à laquelle est appliqué le signal reçu *r(n)* dans le récepteur 2 de la Fig. 1. Cette entrée est reliée, en parallèle, aux deux entrées du corrélateur 17 de Golay (EGC) qui comporte deux sorties sélectivement reliées aux contacts mobiles 18 et 19 d'un dispositif multiplexeur. Le contact 18 est fermé, pendant l'intervalle de temps $N+N_{pg}$, le contact 19 étant ouvert. le contact 18 est ouvert, pendant la durée $N+N_{pg}$, le contact 19 étant fermé. Le contact fixe 18 est relié à un circuit 20 à retard $d_1$ et le contact fixe 19 est relié à un circuit 21 de retard $d_2$. Les sorties des circuits 20 et 21 sont reliées aux deux entrées d'un additionneur 22 qui délivre l'estimé h(n). La différence des retards $d_1$ et $d_2$ est égale à $N+N_{pg}$.

## Revendications

1. Méthode d'estimation d'un canal de transmission ou de télécommunications consistant à utiliser une paire de séquences complémentaires, c'est-à-dire $s(n)$ et $g(n)$, avec $n = 0,1,...,N - 1$, qui ont la propriété que la somme de leurs auto-corrélations est une fonction de Dirac parfaite, c'est-à-dire que :

$$\varphi_{s,s}(n) + \varphi_{g,g}(n) = k \cdot \delta(n) \quad (1)$$

caractérisée en ce qu'on utilise un signal composite constitué de deux séquences complémentaires $s(n)$ et $g(n)$, après avoir multiplexé dans le temps ces deux séquences de manière à exploiter la propriété de la relation (1) ci-dessus.

2. Méthode d'estimation suivant la revendication 1, caractérisée en ce que le signal composite est constitué des deux séquences qui sont concaténées avec, entre elles, un intervalle de garde d'une durée supérieure ou égale à la longueur de la réponse impulsionnelle du canal à estimer.

3. Dispositif générateur du signal composite suivant la revendication 2, caractérisé en ce qu'il comprend, montés en parallèle, un premier circuit générateur (4) de la séquence *s(n),* avec n = 0, ..., N-1, un deuxième circuit générateur (5) de $N_{pg} = 0$ et un troisième circuit générateur (6) de la séquence *g(n)*, avec n = 0, ..., N-1, les sorties des générateurs (4, 5 et 6) étant sélectivement reliées à la sortie (7) du dispositif générateur par un circuit (8) de multiplexage dans le temps.

4. Dispositif destiné à délivrer l'estimé du canal de transmission (3) auquel est appliqué le signal *e(n),* constitué du signal composite suivant l'une des revendications 1 à 3, caractérisé en ce qu'il applique le signal *r(n)* reçu dans le récepteur (2) à un corrélateur (9) qui délivre ledit estimé.

5. Dispositif destiné à délivrer l'estimé du canal de transmission (3) auquel est appliqué le signal *e(n)*, constitué du signal composite suivant l'une des revendications 1 à 3, caractérisé en ce que le signal *r(n)* reçu dans le récepteur (2) est appliqué, d'une part, à un corrélateur (10) et, d'autre part, à un corrélateur (11), le corrélateur (10) établissant la corrélation du signal *r(n)* avec la séquence *s(n)* de la relation (2) tandis que le corrélateur (11) établit la corrélation du signal *r(n)* avec la séquence *g(n)* de la relation (2), les sorties respectives des corrélateurs (10) et (11) étant reliées aux contacts mobiles (12) et (13) d'un multiplexeur, le contact (12) étant fermé, pendant l'intervalle de temps $N+N_{pg}$, le contact (13) étant ouvert, et le contact (12) étant ouvert, pendant la durée $N+N_{pg}$, le contact (13) étant fermé, le contact fixe (12) étant relié à un circuit (14) à retard $d_1$ et le contact fixe (13) étant relié à un circuit (15) de retard $d_2$, les sorties des circuits (14 et 15) étant reliées aux deux entrées d'un additionneur (16) qui délivre l'estimé *h(n)*, la différence des retards $d_1$ et $d_2$ étant égale à $N+N_{pg}$.

6. Dispositif destiné à délivrer l'estimateur du canal de transmission (3) auquel est appliqué le signal *e(n)* constitué du signal composite suivant l'une des revendications 1 à 3, caractérisé en ce que le signal reçu *r(n)* dans le récepteur 20 est appliqué, en parallèle, aux deux entrées du corrélateur (17) de Golay (EMC) qui comporte deux sorties sélectivement reliées aux contacts mobiles (18 et 19) d'un multiplexeur, le contact (18) étant fermé, pendant l'intervalle de temps $N+N_{pg}$, le contact (19) étant ouvert, le contact (18) étant ouvert, pendant la durée $N+N_{pg}$, le contact (19) étant fermé, le contact fixe (18) étant relié à un circuit (20) à retard $d_1$ et le contact fixe (19) étant relié à un circuit (21) de retard d2, les sorties des circuits (20 et 21) étant reliées aux deux entrées d'un additionneur (22) qui délivre l'estimé *h(n)*, la différence des retards $d_1$ et $d_2$ est égale à $N+N_{pg}$.

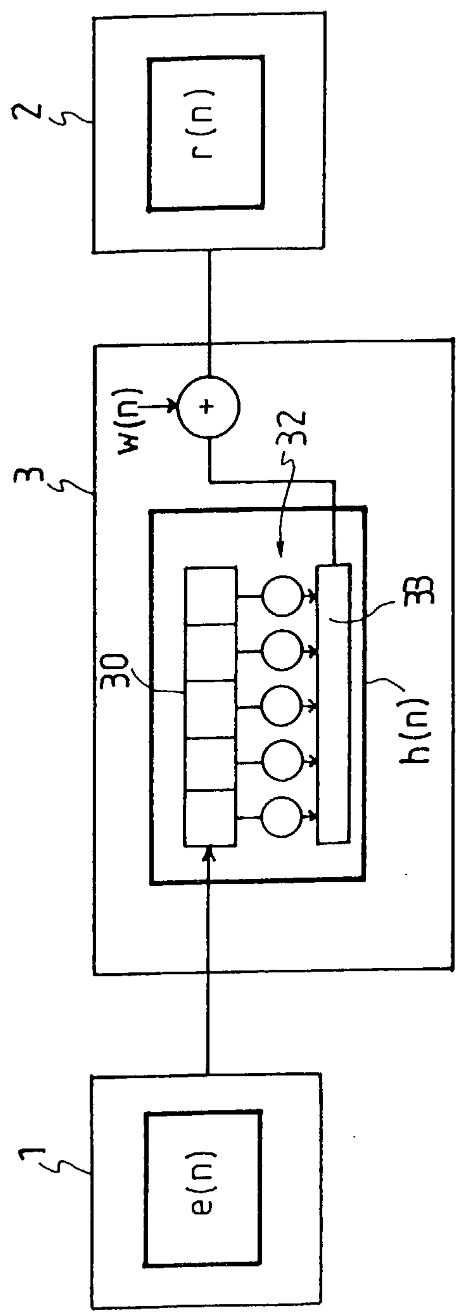


FIG.1

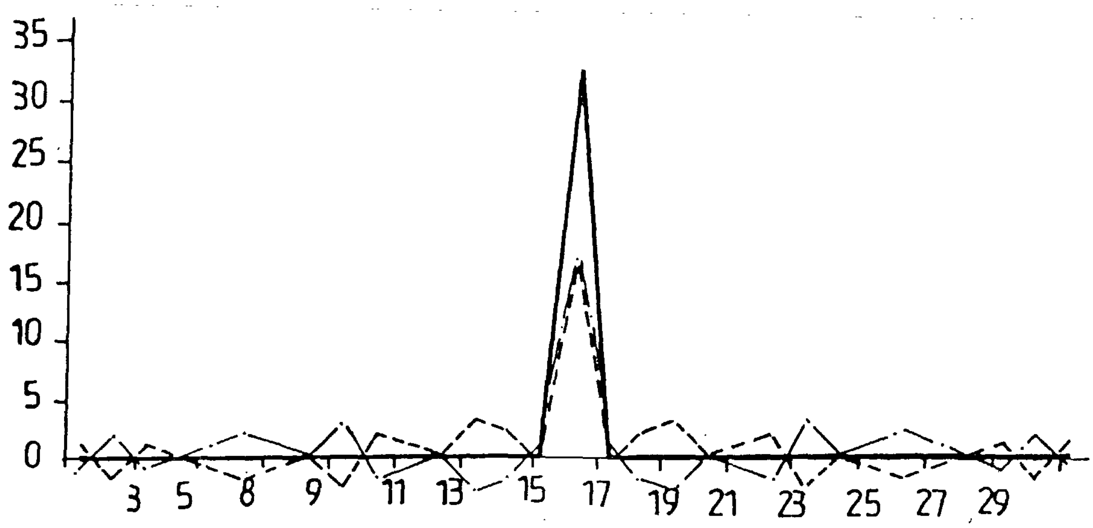


FIG. 2

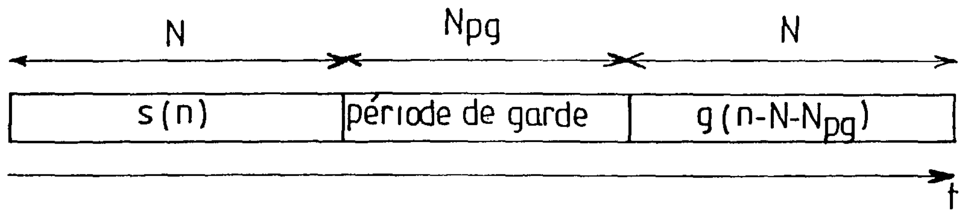


FIG. 3

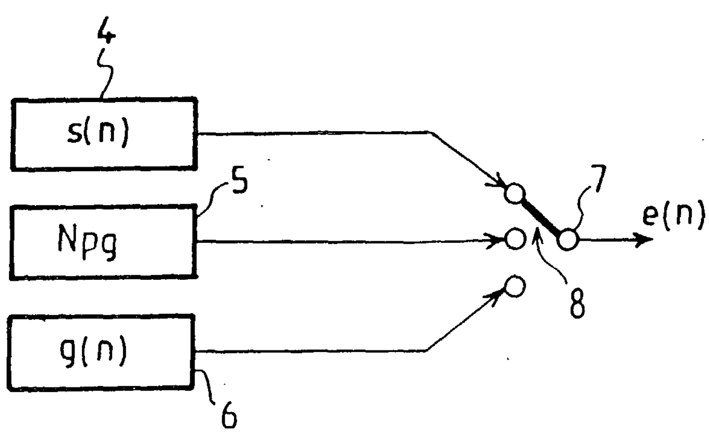


FIG. 4

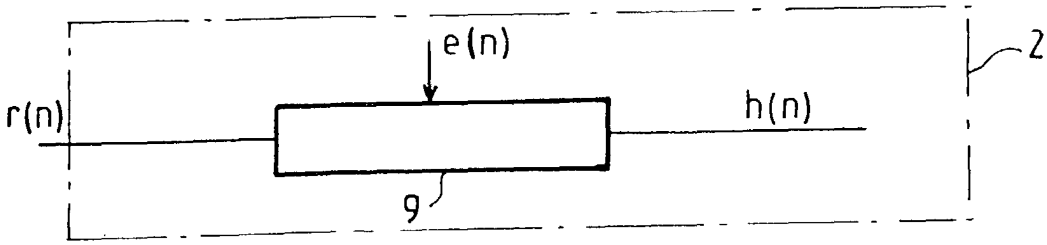


FIG.5

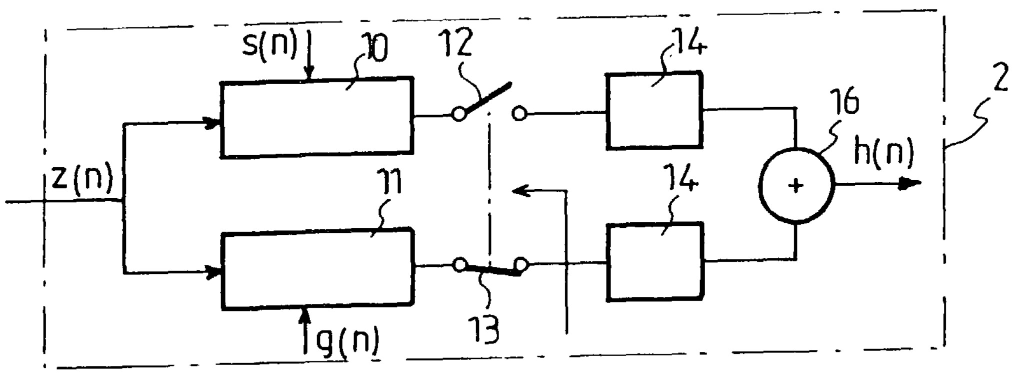


FIG. 6

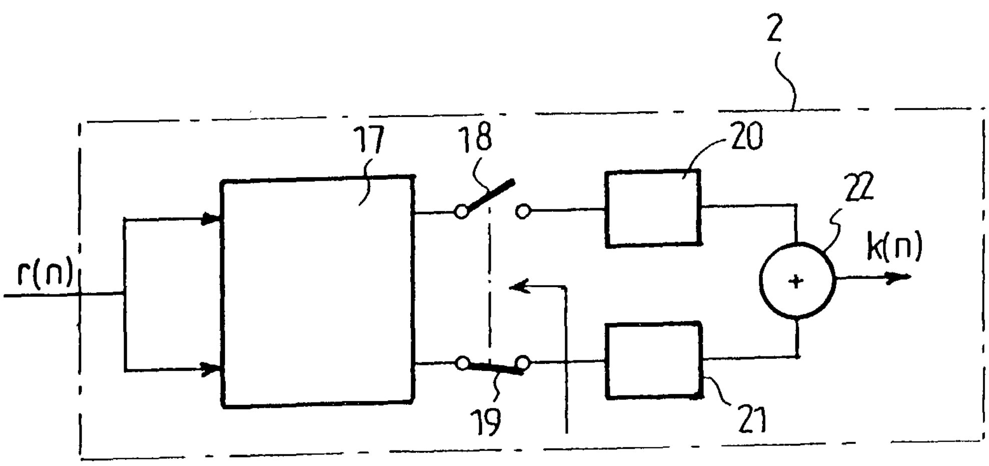


FIG.7

Office européen des brevets

# RAPPORT DE RECHERCHE EUROPEENNE

Numéro de la demande
EP 00 40 3583

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 353 067 A (MIMS)<br>5 octobre 1982 (1982-10-05)<br>* colonne 1, ligne 64 - colonne 2, ligne 6 * | 1-6 | H04L25/02 |
| X | US 5 341 177 A (SUMIT ET AL.)<br>23 août 1994 (1994-08-23)<br>* colonne 5, ligne 3 - ligne 16 *<br>* colonne 5, ligne 26 - ligne 40 *<br>* colonne 8, ligne 60 - ligne 64 * | 1-6 | |
| X | US 5 805 107 A (SCHROTH)<br>8 septembre 1998 (1998-09-08)<br>* colonne 2, ligne 1 - ligne 10 * | 1 | |

DOMAINES TECHNIQUES RECHERCHES (Int.Cl.7)
H04L

Le présent rapport a été établi pour toutes les revendications

| Lieu de la recherche | Date d'achèvement de la recherche | Examinateur |
|---|---|---|
| LA HAYE | 12 juillet 2001 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.** EP 00 40 3583

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

12-07-2001

| Document brevet cité au rapport de recherche | Date de publication | Membre(s) de la famille de brevet(s) | Date de publication |
|---|---|---|---|
| US 4353067 A | 05-10-1982 | AUCUN | |
| US 5341177 A | 23-08-1994 | US 5361102 A | 01-11-1994 |
| | | DE 4226845 A | 11-03-1993 |
| | | GB 2259629 A,B | 17-03-1993 |
| | | JP 2635893 B | 30-07-1997 |
| | | JP 5219415 A | 27-08-1993 |
| | | KR 9504460 B | 01-05-1995 |
| US 5805107 A | 08-09-1998 | DE 19615353 A | 23-10-1997 |
| | | EP 0802427 A | 22-10-1997 |
| | | ES 2145532 T | 01-07-2000 |

EPO FORM P0460

Pour tout renseignement concernant cette annexe : voir Journal Officiel de l'Office européen des brevets, No.12/82